# EUROPEAN PATENT APPLICATION

(11) **EP 2 314 781 A2**
(43) Date of publication of application: **27.04.2011**
(21) Application number: 10188303.1
(22) Date of filing: 21.10.2010
(51) Int. Cl.: E04B 1/80

(54) **Method for manufacturing an insulation plate and an insulation plate**

(30) Priority: 23.10.2009 FI 20096094
(71) Applicant: Finnfoam Oy, 24100 Salo (FI)
(72) Inventor: Nieminen, Henri, 24100, Salo (FI)
(74) Representative: Suominen, Kaisa Liisa

(57) **Abstract**

The invention relates to a method for manufacturing an insulation plate (11), in which method a plastic primary plate (1) is manufactured, which has an upper surface (2) and a lower surface (3). The method comprises at least the following steps: the primary plate (1) is cut into lamellae (8, 9, 10), whereby cutting surfaces (8a, 8b, 9a, 9b, 10a, 10b) in the longitudinal direction of the lamella are formed in the lamellae; the lamellae are turned around their longitudinal axis; and a desired number of said lamellae (8, 9, 10) are glued together to form a secondary plate (11), so that the longitudinal cutting surfaces of the lamellae form at least a part of the upper surface (12) and lower surface (13) of the secondary plate. The invention also relates to an insulation plate (11).

## Description

### TECHNICAL FIELD OF THE INVENTION

The object of the invention is a method for manufacturing an insulation plate and an insulation plate according to the preambles of the independent claims presented further below. The invention especially relates to a new manner of manufacturing an insulation plate from extruded plastic, such as polystyrene.

### BACKGROUND OF THE INVENTION

Plastics, such as polystyrene, are widely used as manufacturing materials for building insulations. For example expanded polystyrene (EPS) or extruded polystyrene, i.e. XPS, can be used as insulation. XPS insulation is manufactured by mixing a propellant under high pressure with molten polystyrene. The molten material is pressed from a nozzle with high pressure between guide plates into a normal air pressure, whereby the material swells to a desired thickness and is solidified into a so-called primary plate. Carbon dioxide can for example be used as the propellant, which is dissolved into the molten polystyrene under high pressure. When the carbon dioxide exits the nozzle into the normal air pressure, it is gasified and forms bubbles. The bubbles provide a cellular structure in the polystyrene. With modifying substances of the cellular structure and with settings of the machine, the bubbles i.e. the cells are made into a desired size and shape. A completely uniform cellular structure is obtained in the insulation plate. The thickness of the manufactured XPS plate can be for example 50-80 mm. If thicker insulations are needed, several plates are glued on top of each other.

The bubbles of the XPS plastic, i.e. the polystyrene cells, are typically formed to be somewhat elongated in the thickness direction of the insulation plate. The heat insulation ability of the XPS plastic is slightly lower in the longitudinal direction of the cells than perpendicularly thereto.

The XPS plate has a good tensile strength as such. The strength of the gluing between plates glued on top of each other is often a limiting factor when determining the tensile strength in the direction of the thickness of the insulation plate.

### OBJECT AND BRIEF DESCRIPTION OF THE INVENTION

It is an object of the present invention to reduce or even eliminate the above-mentioned problems appearing in prior art.

It is an object of the present invention to provide an insulation material manufactured from plastic, which has even better properties than before.

It is especially an object of the present invention to provide an insulation material manufactured from extruded plastic, which has even better properties than before.

It is especially an object of the present invention to provide an XPS insulation material, which has a better heat insulation ability.

It is especially an object of the present invention to provide XPS insulation plates, which are thicker and more durable than before.

It is an object of the present invention to make the manufacture of XPS insulation plates more effective.

It is an object of the present invention to provide XPS insulation plates with effective heat insulation, which are suited for example for passive houses.

In order to achieve among others the objects mentioned above, the method and the insulation plate and other objects of the invention are characterized by what is presented in the characterizing parts of the enclosed independent claims.

The embodiments and advantages mentioned in this text relate both to the method, insulation plate as well as to the uses according to the invention, even though it is not always specifically mentioned.

The different embodiments of the invention are suited for use in connection with different plastics. The invention is for example suited for use with the following plastics: polyethylene terephthalate (PET), polyvinyl chloride (PVC), polyethylene (PE), polypropylene (PP), polystyrene (PS). The invention is especially suited for use with extruded plastics, such as extruded polyethylene (XPE), extruded polypropylene (XPP), extruded polystyrene (XPS).

In a typical method according to the invention for manufacturing an insulation plate, a primary plate, which has an upper surface and a lower surface, is manufactured from plastic, such as polystyrene, for example by extruding. The primary plate is cut into lamellae, whereby cutting surfaces in the longitudinal direction of the lamella are formed in the lamellae. At least some of the lamellae are turned around their longitudinal axis. A desired number of lamellae are glued together to form a secondary plate, so that the longitudinal cutting surfaces of the lamellae form at least a part of the upper and lower surfaces of the secondary plate.

A typical insulation plate according to the invention is at least mainly manufactured from a plastic primary plate, for example from an extruded polystyrene primary plate. Lamellae have been cut from the primary plate, whereby cutting surfaces in the longitudinal direction of the lamella have been formed in the lamellae. The insulation plate comprises several lamellae glued together. The longitudinal cutting surfaces of the lamellae form at least a part of the upper and lower surfaces of the insulation plate.

In this text a secondary plate means a plate obtained from lamellae by gluing. A completed insulation plate means a completed product, which can for example be sold. The completed insulation plate can for example have tongues, grooves or other shapes needed thereby. The secondary plate can be a completed insulation plate even as such, i.e. without any modification or treatment.

It has thus now surprisingly been noted that by cutting the primary plate into lamellae and gluing the lamellae together in a desired manner, the properties, such as the heat insulation ability and the strength properties, of the completed insulation plate can be adjusted in a simple manner.

In an embodiment of the invention the lamellae cut from the primary plate are glued together to form a secondary plate at least approximately in the same order as they were in the primary plate. But in the secondary plate and in the completed insulation plate at least some, possibly all of the lamellae are in a different position in relation to each other than they were in the primary plate.

In an embodiment of the invention the surfaces, which functioned as the upper and lower surface in the primary plate, are glued together. At least some of these surfaces, or even all of these surfaces, are thus left inside the secondary plate.

In an embodiment of the invention the secondary plate is formed into a completed insulation plate with a separate treatment. For example the edges, upper surface or lower surface of the secondary plate can be shaped in a desired manner. The insulation plate can for example be equipped with tongues, protrusions, grooves, for example fish-tail grooves and cavities.

In an embodiment of the invention the lamellae cut from the primary plate are shaped, for example cut into a desired length.

In an embodiment of the invention the lamellae are longitudinal and of a desired length.

In an embodiment of the invention the upper and lower surfaces of the primary plate are substantially planar, but other shapes are also possible. Planar surfaces are easy to glue together in a stable manner.

In an embodiment of the invention the upper surface and lower surface of the secondary plate or the completed insulation plate are planar. Other shapes are naturally also possible.

In an embodiment of the invention the primary plate is manufactured by extruding in the manufacturing direction.

In an embodiment of the invention the longitudinal direction of the lamellae, i.e. the direction in which the lamellae are cut from the primary plate, is substantially perpendicular in relation to the manufacturing direction of the primary plate.

In an embodiment of the invention the at least somewhat elongated bubbles, for example polystyrene cells, in the completed insulation plate are directed substantially in the direction of the upper and lower surface of the completed insulation plate. The lamellae are thus placed in an optimal position with regards to the heat insulation ability.

In an embodiment of the invention the gas bubbles and the plastic cells formed around them, for example the polystyrene cells, in the secondary plate and the completed insulation plate have a substantially lens-like i.e. flattened shape. In an embodiment the cells are flattened in the manufacturing direction of the primary plate, i.e. so that the smallest diameter of the cells is substantially in the manufacturing direction. In an embodiment the smallest diameter of the cells in the completed insulation plate is directed substantially perpendicularly against the upper surface and the lower surface of the insulation plate. The cells can also have another shape.

In an embodiment of the invention all or at least most of the surfaces between the insulation lamellae which have been glued together and thus also the gluings in the completed insulation plate are directed substantially perpendicularly against the upper and lower surfaces of the completed insulation plate. Thus the strength of the gluings between the primary plates does not become a limiting factor for the tensile strength in the direction of the thickness of the insulation plate.

In an embodiment of the invention, after the cutting of the longitudinal lamellae, the lamellae are turned 60°-120° around their longitudinal axis. Thus the lamellae are in a new position in relation to each other. In this position they are easy to glue onto the completed insulation plate. For example if at least approximately rectangular lamellae have been cut from the primary plate, the lamellae can be turned about 90° around their longitudinal axis.

In an embodiment of the invention the glue is spread onto the primary plate after it has been cut into lamellae.

In an embodiment of the invention the glue is spread before the primary plate is cut into lamellae. It is easy to spread glue onto a whole and even surface.

In an embodiment of the invention the glue is spread onto the upper surface of the primary plate before the lamellae are turned. It is easy to spread the glue downwards from above.

In an embodiment of the invention the glue is spread as lines. The glue lines can for example be substantially straight, curving, or the lines can form loops on the surface of the plastic. The glue can be spread by spraying drops, which form glue spots on the surface of the plastic. In an embodiment of the invention the glue is spread with a spatula into a substantially even layer.

In an embodiment of the invention hot melt adhesive is used as the glue. The hot melt adhesive comprises a solid polymer, which melts when heated. A glue seam is formed when the molten glue hardens as it cools down. In its molten state the glue can be administered in several different ways. Hot melt adhesives are generally well recyclable.

In an embodiment of the invention a so-called low temperature hot melt adhesive is used. The melting point of the glue can be for example under 150 °C or under 140 °C. A glue of this temperature does at least not significantly damage the plastic, which is glued with it.

In an embodiment of the invention the lamellae to be glued together are pressed together when they are set opposite each other. Thus the adhesion of the gluings between the lamellae is made more effective.

In an embodiment of the invention the width of the secondary plate is defined so that no glue is arranged between the opposite surfaces of certain lamellae to be placed adjacently.

The method according to the invention makes possible a continuous and effective manner of manufacturing insulation plates, which are formed in the above mentioned manner by cutting a primary plate into lamellae, turning the lamellae around their longitudinal axis and gluing together a desired number of lamellae to form a secondary plate. Especially the use of hot melt adhesive makes possible the gluing together of the lamellae in a continuous process.

The primary plates, secondary plates and insulation plates according to the invention can be manufactured in any desired size. Exemplary measurements suitable for the different embodiments of the invention:
The width of the primary plate, which is perpendicular to the manufacturing direction 300-1500 mm.
The length of the primary plate 10-50,000 mm.
The thickness of the primary plate 10-250 mm.
The length of the lamella 300-1,500 mm.
The thickness of the lamella 10-250 mm.
The width of the lamella in the manufacturing direction of the primary plate 150-500 mm.
The length of the secondary plate and the completed insulation plate 300-1,500 mm.
The thickness of the secondary plate and the completed insulation plate 150-500 mm.
The width of the secondary plate and the completed insulation plate 500-2,000 mm.

### BRIEF DESCRIPTION OF THE FIGURES

The invention is described in more detail below with reference to the enclosed schematic drawing, in which
- Figure 1: shows a primary plate according to the invention, and
- Figure 2: shows a secondary plate according to the invention.

### DETAILED DESCRIPTION OF THE EXAMPLES OF THE FIGURES

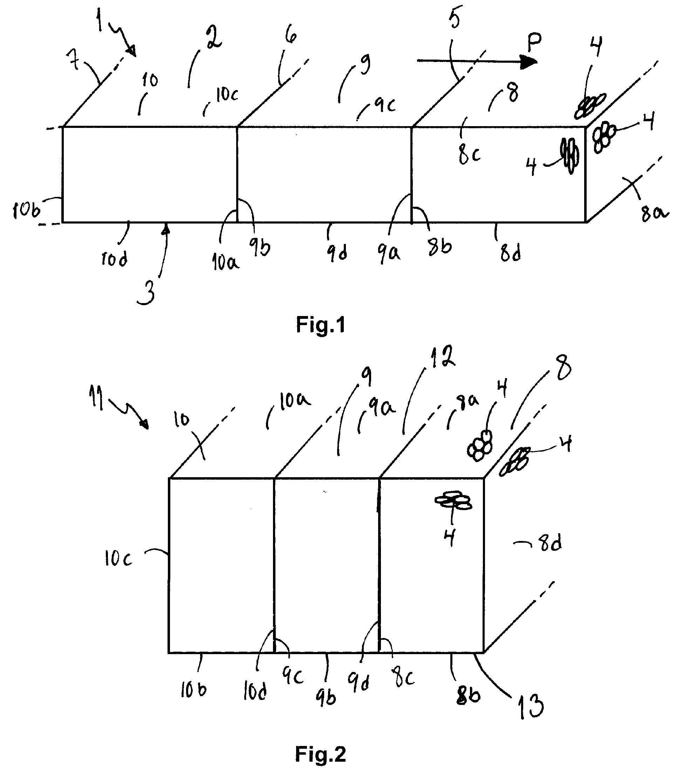

Figure 1 shows a primary plate 1 according to the invention, manufactured from extruded polystyrene. The primary plate has a planar upper surface 2 and lower surface 3. The polystyrene cells 4, which are drawn to be magnified in the figure, have a lens-like, i.e. flattened, shape in the manufacturing direction P of the primary plate. Cutting points 5, 6 and 7 have been marked in the figure, where the primary plate is cut into lamellae 8, 9 and 10. Cutting surfaces 8b, 9a, 9b, 10a, 10b, which are perpendicular in relation to the manufacturing direction P, are thus formed in the lamellae. The edge of the lamella 8 has a cutting surface 8a, where the previous lamella has been cut off. Surfaces 8c, 9c, 10c are formed from the upper surface of the primary plate and surfaces 8d, 9d, 10d from the lower surface. After the cutting of the lamellae, glue suited for gluing XPS plates is spread onto the surfaces 8c and 9a.

The lamellae 8, 9 and 10 are turned 90° around their longitudinal axis, and glued together at their surfaces 8c, 9d, 9c and 10d, which functioned as the upper and lower surface in the primary plate 1. The plates are pressed together by the surfaces 8d and 10c in order to make the gluing more effective. Thus a secondary plate 11 manufactured from three lamellae, as shown in Figure 2, is formed. In the secondary plate 11 the longitudinal cutting surfaces 8a, 8b, 9a, 9b, 10a, 10b of the lamellae settle on the planar upper and lower surfaces 12 and 13. Several secondary plates as shown in Figure 2 can be arranged subsequently and pressed together. There is no glue on the surfaces of adjacent secondary plates, which surfaces are against each other, such as 8d and 10c, so adjacent secondary plates do not adhere to each other.

In some cases the secondary plate 11 can be the completed insulation plate 11 for selling. It is naturally possible to treat the secondary plate further, for example by milling attaching tongues or the like in its edges.

The figures show only a few preferred embodiments according to the invention. The figures do not specifically show matters that are of secondary importance in view of the main idea of the invention, known as such or obvious as such for someone skilled in the art. It is obvious to someone skilled in the art that the invention is not limited merely to the above-described examples, but the invention may vary within the scope of the claims presented below. The dependent claims present some possible embodiments of the invention, and they are as such not to be considered to restrict the scope of protection of the invention.

## Claims

1. A method for manufacturing an insulation plate (11), in which method a plastic primary plate (1) is manufactured, which has an upper surface (2) and a lower surface (3), **characterized in that** the method comprises at least the following steps of
- cutting the primary plate (1) into lamellae (8, 9, 10), whereby cutting surfaces (8a, 8b, 9a, 9b, 10a, 10b) in the longitudinal direction of the lamella are formed in the lamellae;
- turning the lamellae around their longitudinal axis;
- gluing a desired number of said lamellae (8, 9, 10) together to form a secondary plate (11), so that the longitudinal cutting surfaces of the lamellae form at least part of the upper surface (12) and lower surface (13) of the secondary plate.

2. The method according to claim 1, **characterized in**
- gluing a desired number of said lamellae (8, 9, 10) together to form a secondary plate (11), so that the surfaces (8c, 9d, 9c, 10d), which functioned as the upper and lower surface in the primary plate, are glued together.

3. The method according to claim 1 or 2, **characterized in that** readymade insulation plate is formed from the secondary plate for example by shaping the edges, upper surface (12) or lower surface (13) of the secondary plate.

4. The method according to any of the preceding claims, **characterized in that** the upper surface (2) and lower surface (3) of the primary plate and of the secondary plate are planar.

5. The method according to any of the preceding claims, **characterized in that** the primary plate is manufactured by extruding in the manufacturing direction (P).

6. The method according to claim 5, **characterized in that** the longitudinal direction of the lamellae is substantially perpendicular in relation to the manufacturing direction of the primary plate.

7. The method according to any of the preceding claims, **characterized in that** the primary plate is manufactured mainly from polystyrene.

8. The method according to any of the preceding claims, **characterized in that** after the cutting of the longitudinal lamellae
- the lamellae are turned 60°-120° around their longitudinal axis.

9. The method according to any of the preceding claims, **characterized in that**
- the glue is spread onto the primary plate after the cutting of the longitudinal lamellae.

10. The method according to any of the preceding claims, **characterized in that** the width of the secondary plate is defined so that no glue is arranged between the surfaces (8d, 10c) of certain adjacently placed lamellae.

11. An insulation plate (11), which is at least mainly manufactured from a plastic primary plate (1), which has an upper surface (2) and a lower surface (3), **characterized in that** lamellae (8, 9, 10) have been cut from the primary plate, whereby longitudinal cutting surfaces (8a, 8b, 9a, 9b, 10a, 10b) of the lamella have been formed in the lamellae, whereby the insulation plate (11) comprises several lamellae (8, 9, 10) glued together, the longitudinal cutting surfaces of which form at least part of the upper surface (12) and lower surface (13) of the insulation plate.

12. The insulation plate according to claim 11, **characterized in that** the surfaces (8c, 9d, 9c, 10d), which functioned as the upper and lower surface in the primary plate, have been glued together.

13. The insulation plate according to any of the preceding claims 11-12, **characterized in that** the primary plate is manufactured mainly from extruded polystyrene.

14. The insulation plate according to any of the preceding claims 11-13, **characterized in that** the insulation plate has polystyrene cells, the shape of which is substantially lens-like, i.e. flattened, and in the readymade insulation plate their smallest diameter is substantially directed perpendicularly against the upper surface (12) and lower surface (13) of the insulation plate.

15. The insulation plate according to any of the preceding claims 11-14, **characterized in that** the surfaces between lamellae, which are glued together, in the insulation plate and thus also the gluings between the lamellae are directed substantially perpendicularly against the planar upper and lower surfaces.
